# EUROPEAN PATENT APPLICATION

(11) **EP 4 567 080 A1**
(43) Date of publication of application: **11.06.2025**
(21) Application number: 23849737.4
(22) Date of filing: 30.05.2023
(51) Int. Cl.: C09D 11/30, B41J 2/01, B41M 5/00, C09D 11/38

(54) **PHOTOCURABLE INKJET INK COMPOSITION**

(30) Priority: 02.08.2022 JP 2022123345
(71) Applicant: KJ Chemicals Corporation, Tokyo 103-0023 (JP); Sakata INX Corporation, Osaka-shi, Osaka 550-0002 (JP)
(72) Inventor: KAWAMOTO, Kenji, Osaka-shi, Osaka 550-0002 (JP); NITTA, Ryoichi, Osaka-shi, Osaka 550-0002 (JP); NAKASHIMA, Okinori, Osaka-shi, Osaka 550-0002 (JP)
(74) Representative: Müller-Boré & Partner Patentanwälte PartG mbB
(86) International application number: PCT/JP2023/020124
(87) International publication number: WO 2024/029176

(57) **Abstract**

An object is to obtain a photocurable inkjet ink composition that can have appropriate viscosity as an inkjet ink composition while also realizing sufficiently high reactivity to reduce migration substances generating from the coating film of the cured photocurable inkjet ink composition. As a solution, a photocurable inkjet ink composition containing the following A to E, having a viscosity of 100 cps or less and a surface tension of 32.0 mN/m or less.
A. a polymeric photoinitiator having ethylenic unsaturated bonds
B. a thioxanthone-based compound having photosensitization action
C. a (meth)acrylate-based polymerizable compound
D. a (meth)acrylamide-based compound and/or aminobenzoate compound
E. a surface additive

## Description

### Technical Field

The present invention relates to a photocurable inkjet ink composition.

### Background Art

Photocurable inkjet ink compositions include the solvent type containing a solvent and the nonsolvent type containing no solvent. Inkjet ink compositions of the nonsolvent type are normally inkjet ink compositions of the photocurable type.

When printing using a solvent-type inkjet ink composition, this ink composition must be dried and solidified after printing, and skipping steps for achieving such requirements would make it difficult to process, in subsequent steps, the printed matter that has been printed.

Among the photocurable inkjet ink compositions, preferably those of the nonsolvent type are used in printing processes that are implemented with such postprocessing in mind. Traditionally, low-molecular-weight photoinitiators representing photoinitiators having particularly high reactivity have been selected, because quick processing after printing requires quick curing of photocurable inkjet ink compositions.

However, using any such photoinitiator that is highly reactive and low in molecular weight can cause unreacted initiator, initiator fragments, and other components derived from the photoinitiator to migrate from the photocured ink coating film.

To address the aforementioned problem, an inkjet composition containing a specific acylphosphine oxide compound as a photoinitiator to reduce the migration quantity is known, as shown in Patent Literature 1.

Also, as shown in Patent Literature 2, an inkjet ink composition comprising a specific compound having four amide bonds and a photoinitiator of 400 to 2,000 in molecular weight is known.

Additionally, as shown in Patent Literature 3, an inkjet ink composition causing less migration that contains a polymeric initiator having an acylphosphine structure, a polymerizable compound, and a colorant, is known.

Also, it is known that OMNIPOL TX can be contained as a sensitizer, while tripropylene glycol diacrylate or EO-modified trimethylolpropane triacrylate can be used as a polymerizable compound.

However, with inkjet ink compositions of the photocurable type that adopt a photoinitiator whose molecular weight has been increased from the viewpoint of preventing migration to other articles, such as those represented by the inventions described in these patent literatures, the viscosity of the composition can become higher.

### Background Art Literature

### Patent Literature

Patent Literature 1: International Patent Laid-open No. WO 2018/047484
Patent Literature 2: Japanese Patent Laid-open No. 2014-240464
Patent Literature 3: Japanese Patent Laid-open No. 2014-185319

### Summary of the Invention

### Problems to Be Solved by the Invention

The present invention, which was made in light of the aforementioned circumstances, is able to provide a photocurable inkjet ink composition that, by adding a specific photoinitiator to a photocurable inkjet ink composition having a specific compositional makeup, can have appropriate viscosity as an inkjet ink composition while also realizing sufficiently high reactivity to reduce migration substances generating from the coating film of the cured photocurable inkjet ink composition.

### Means for Solving the Problems

The inventors of the present invention found that the aforementioned problems can be solved by the photocurable inkjet ink composition described below, and eventually completed the present invention as follows:
1. A photocurable inkjet ink composition containing the following A to E, having a viscosity of 100 cps or less and a surface tension of 32.0 mN/m or less.
   A. a polymeric photoinitiator having ethylenic unsaturated bonds
   B. a thioxanthone-based compound having photosensitization action
   C. a (meth)acrylate-based polymerizable compound
   D. a (meth)acrylamide-based compound and/or aminobenzoate compound
   E. a surface additive
2. The photocurable inkjet ink composition according to 1, wherein the above-mentioned A, that is, a polymeric photoinitiator having ethylenic unsaturated bonds is a photoinitiator containing at least one (meth)acrylamide group and at least one benzophenone group, wherein the (meth)acrylamide group and the benzophenone group are connected by a bivalent organic group having a polyether skeleton and urethane bond.
3. The photocurable inkjet ink composition according to 1 or 2, containing a pigment having an average particle diameter of 500 nm or less.
4. The photocurable inkjet ink composition according to any one of 1 to 3, which is curable by light of 360 to 420 nm in wavelength.
5. The photocurable inkjet ink composition according to any one of 1 to 4, containing a thioxanthone-based compound having a photosensitization action that has a molecular weight of 500 or more.

### Effects of the Invention

According to the present invention, a photocurable inkjet ink composition having sufficiently high reactivity, excellent antimigration property that makes the ink composition fully usable in food packaging applications, as well as excellent resin film adhesion and LED curability, can be obtained. In particular, the photocurable inkjet ink composition, despite containing a polymeric initiator, is adjustable to appropriate viscosity.

It should be noted that, under the present invention, all initiator-derived components including unreacted initiator and initiator fragments that have passed through the substrate and migrated to the mock food (ethanol-water solution), in the printed matter formed by printing and curing the photocurable inkjet ink composition, are referred to as "migration components."

### Mode for Carrying Out the Invention

Hereunder, the photocurable inkjet ink composition proposed by the present invention (hereinafter also referred to simply as "ink composition" depending on the situation) is used in the same applications as the conventional photocurable inkjet ink compositions. Also, in the Specification, all polymerizable components in the present invention consist of the monomers and oligomers contained in the ink composition and represent all components that react with one another and polymerize in the course of curing. In addition, "(meth)acrylate" refers to "acrylate and/or methacrylate," "(meth)acrylamide" refers to "acrylamide and/or methacrylamide," and "(meth)acrylic acid" refers to "acrylic acid and/or methacrylic acid."

Additionally, the photocurable inkjet ink composition under the present invention is intended for printing and not for obtaining three-dimensional molded products.

### [A. Ethylenic Unsaturated Bond-containing Polymeric Photoinitiator]

The photocurable inkjet ink composition proposed by the present invention contains an ethylenic unsaturated bond-containing polymeric photoinitiator. Also, under the present invention, one type, or two or more types, of ethylenic unsaturated bond-containing polymeric photoinitiators can be contained in the photocurable inkjet ink composition.

The ethylenic unsaturated bond(s) in the ethylenic unsaturated bond-containing polymeric photoinitiator is/are one type, or two or more types, of bonds selected from the group that consists of (meth)acrylamide groups, (meth)acrylate groups, vinyl groups, vinyl ether groups, methyl vinyl ether groups, aryl groups, (meth)aryl ether groups, and maleimide groups. Also, if the ethylenic unsaturated bond-containing polymeric photoinitiator has two or more ethylenic unsaturated bonds, they may be the same or different. In addition, preferably the ethylenic unsaturated bond-containing polymeric photoinitiator has at least one (meth)acrylamide group as an ethylenic unsaturated bond. If the ethylenic unsaturated bond-containing polymeric photoinitiator is a radical-based photoinitiator, the (meth)acrylamide group content shifts the optical absorption wavelength toward the long-wavelength side and makes it no longer necessary to use short-wavelength light carrying high energy and thus high risk, which increases the safety of the photocuring reaction; additionally, the high polymerizability of the (meth)acrylamide groups increases the photo-curability of the photocurable inkjet ink composition in which they are contained. If a photocurable inkjet ink composition whose ethylenic unsaturated bond-containing polymeric photoinitiator is a cationicbased photoinitiator or photocurable inkjet ink composition whose ethylenic unsaturated bond-containing polymeric photoinitiator is an anionic-based photoinitiator is used concomitantly, the (meth)acrylamide groups will have excellent hydrolysis resistance in either an acidic condition or basic condition, resulting in good stability of the composition before curing and good durability of the cured product after curing.

For the photo-radical polymerization-initiating functional groups used in the ethylenic unsaturated bond-containing polymeric photoinitiator, preferably hydrogen-abstraction type photo-radical polymerization-initiating functional groups that generate active radicals when irradiated with light and can also exist as structural units via covalent bonds in the cured product following the photopolymerization reaction, are used. Any one type of these photopolymerization-initiating functional groups can be used, or two or more types can be combined.

The photo-radical polymerization-initiating functional groups used in the ethylenic unsaturated bond-containing polymeric photoinitiator include photopolymerization-initiating functional groups of the hydrogen-abstraction type, such as benzophenone, alkyl diaminobenzophenone, 4,4'-bis(dimethylamino)benzophenone, 4-benzoyl-4'-methyldiphenyl sulfide, and other benzophenone derivative-derived groups having a diaryl ketone skeleton. Also, from the viewpoint of achieving both high photoinitiation ability and good coloring resistance, benzophenone-derived groups are preferred. Any one type of these photopolymerization-initiating functional groups can be used, or two or more types can be combined.

If the ethylenic unsaturated bond-containing polymeric photoinitiator has a photo-radical polymerization-initiating functional group of the hydrogen-abstraction type, preferably it has in the molecule a functional group that can become a hydrogen-donating group. The functional group that can become a hydrogen-donating group is not specifically limited, but may be, for example, an amide group, urethane group, urea group, hydroxyl group, thiol group, carboxylic acid, or the like. It is more preferable that, of these, the ethylenic unsaturated bond-containing polymeric photoinitiator has a urethane group that offers excellent coloring resistance. Also, the functional group that can become a hydrogen-donating group may be directly bonded to the photopolymerization-initiating functional group, while it is particularly preferable that the functional group that can become a hydrogen-donating group is bonded to the photopolymerization-initiating functional group via other functional group because then hydrogen abstraction can take place either intermolecularly or intramolecularly and consequently sufficient polymerization-initiating property will be demonstrated even against highly safe long-wavelength light of 360 nm or higher in wavelength.

The ethylenic unsaturated bond-containing polymeric photoinitiator has one or more repeating units, each comprising a bivalent organic group having a polyether skeleton and urethane bond with a benzophenone skeleton bonded to the organic group, as well as one or more (meth)acrylamide units bonded to the repeating units. The interaction between the flexibility of the polyether skeleton and toughness of the urethane bond achieves excellent adhesion of the ink composition and its cured coating film to resin films, while also making it possible to easily adjust the molecular weight of the polymeric photoinitiator, which in turn allows for adjustment of the viscosity of the ink composition as deemed appropriate.

Preferably the molecular weight of the ethylenic unsaturated bond-containing polymeric photoinitiator is 1,000 to 100,000 in number-averaged molecular weight. Additionally, a number-averaged molecular weight of 1,000 or higher prevents migration even when any unreacted initiator remains. Also, a number-averaged molecular weight of 100,000 or lower allows for easy adjustment of the polarity (balance between hydrophilicity and hydrophobicity) of the obtained photoinitiator, makes the photoinitiator highly soluble in each component used in the photocurable inkjet ink composition, permits the viscosity of the composition in which the ethylenic unsaturated bond-containing polymeric photoinitiator is dissolved to be controlled within a range suitable for application, injection, extrusion, and various other types of operations, and also ensures transparency of the photocurable inkjet ink composition.

The content of this ethylenic unsaturated bond-containing polymeric photoinitiator in the ink composition is 1.0 to 40.0% by mass. Additionally, it is contained preferably by 1.5% by mass or more, or more preferably by 5.0% by mass or more. Also, it is contained preferably by 37.0% by mass or less, or more preferably by 30.0% by mass or less.

Also, the ethylenic unsaturated bond-containing polymeric photoinitiator in the present invention has one or more ethylenic unsaturated bonds and one or more photopolymerization-initiating functional groups in the molecule. Also, from the viewpoint of improving the photoinitiation ability and photo-curability against long-wavelength light, and also from the viewpoint of enabling reliable entry into the cured product via covalent bonds after the start of photopolymerization, preferably the ethylenic unsaturated bond-containing polymeric photoinitiator has two or more ethylenic unsaturated bonds in the molecule. Additionally, the ratio of the number of ethylenic unsaturated bonds (groups) and number of photopolymerization-initiating functional groups in the molecule (ratio of the number of ethylenic unsaturated bonds and number of photopolymerization-initiating functional groups) is preferably 1/10 to 10/1, or more preferably 1/8 to 8/1, or particularly preferably 1/5 to 5/1. If this number ratio is below 0.1 (1/10), the rate of photopolymerization of the photocurable inkjet ink composition can become significantly high, although depending on the content of the photoinitiator in the photocurable inkjet ink composition. If this number ratio exceeds 10.0 (10/1), on the other hand, the photoinitiator will remain unfixed via covalent bonds as structural units in the cured product even after the photopolymerization reaction (curing) has ended, the result of which, although depending on the molecular weight of the photoinitiator, is that any low-molecular-weight photoinitiator will exist in the cured product as free low molecules and may prevent problems of odor and easy discoloration over time, presented by the cured product, from being resolved sufficiently.

The ethylenic unsaturated bond-containing polymeric photoinitiator in the present invention is a compound of high molecular weight comprising one or more groups having ethylenic unsaturation property and one or more groups having photoinitiation ability, and it must have each of these groups in one high molecule regardless of the structure of high molecule other than these groups. It is because it has such a structure that the effects of the present invention can be demonstrated.

The photo-radical polymerization-initiating functional groups used in the ethylenic unsaturated bond-containing polymeric photoinitiator in the present invention are not specifically limited so long as they are functional groups that generate active radicals when irradiated with light. Examples include photo-radical polymerization-initiating functional groups of the hydrogen-abstraction type and electron-donating type that generate radicals through exchange of hydrogen and electrons, respectively, after absorbing light. Also, from the viewpoint of the ability to exist in the cured product via covalent bonds as structural units after the photopolymerization reaction, and also from the viewpoint of industrial availability and ease of manufacturing, preferably the photoinitiator has hydrogen-abstraction type photo-radical polymerization-initiating functional groups. Any one type of these photopolymerization-initiating functional groups can be used, or two or more types can be combined.

For the photoinitiators that may not be used concomitantly, or may be used concomitantly, with the ethylenic unsaturated bond-containing polymeric photoinitiator, which are not specifically limited so long as they start polymerization when active energy ray is received, and to the extent that the effects of the present invention are not impaired, any photoinitiators conventionally used in photocurable inkjet ink compositions can be used.

Such photoinitiators include, for example, benzoin ether-based photoinitiators, acetophenone-based photoinitiators, α-ketol-based photoinitiators, aromatic sulfonyl chloride-based photoinitiators, photoactive oxime-based photoinitiators, benzoin-based photoinitiators, benzyl-based photoinitiators, benzophenone-based photoinitiators, ketal-based photoinitiators, triazine-based photoinitiators, acylphosphine oxide-based photoinitiators, and the like. Of these, triazine-based photoinitiators and acylphosphine oxide-based photoinitiators are preferred from the viewpoint of good curability under light-emitting diode (LED) light. Any one of the foregoing photoinitiators can be used alone, or two or more types can be combined.

Such photoinitiators include, for example, bis(2,4,6-trimethylbenzoyl)phenylphosphine oxide, ethoxy(2,4,6-trimethylbenzoyl)phenylphosphine oxide, benzophenone, diethylthioxanthone, 2-methyl-1-(4-methylthio)phenyl-2-morpholinopropane-1-one, 4-benzoyl-4'-methyldiphenyl sulfide, 1-chloro-4-propoxythioxanthone, isopropylthioxanthone, 2-hydroxy-2-methyl-1-phenylpropane-1-one, 1-hydroxycyclohexylphenyl ketone, bis-2,6-dimethoxybenzoyl-2,4,4-trimethylpentylphosphine oxide, 1-[4-(2-hydroxyethoxy)-phenyl]-2-hydroxy-2-methyl-1-propane-1-one, 2,2-dimethyl-2-hydroxyacetophenone, 2,2-dimethoxy-2-phenylacetophenone, 2,4,6-trimethylbenzyl-diphenylphosphine oxide, 2-benzyl-2-dimethylamino-1-(morpholinophenyl)-butane-1-one, and the like.

Also, any polymeric photoinitiator other than the ethylenic unsaturated bond-containing polymeric photoinitiator in the present invention may or may not be used concomitantly. Such polymeric photoinitiator has a number-averaged molecular weight of 450 or higher and may be a polymer compound having a benzoyl group, phosphonoyl group, acyloxymilketone group, or the like, low-molecular photoinitiator bonded to a skeleton of polyether structure or polyester structure, multimer of a low-molecular photoinitiator (KEYCURE POL-8150 (UV Chem-keys Co., Ltd.)), photopolymerizable polymer compound to which a low-molecular photoinitiator is bonded (LOMICURE 450 (BCH Brühl-Chemikalien Handel GmbH)), or the like.

Additionally, specific examples of this polymeric initiator include, for example, poly(oxy-1,2-ethanediyl)-α-(1-oxo-2-propenyl)-ω-(4-benzoyl-phenoxy)-, oligo[2-hydroxy-2-methyl-1-[4-(1-methylvinyl)phenyl]propanone], and the like.

### [B. Thioxanthone-based Compound Having Photosensitization Action]

The photocurable inkjet ink composition proposed by the present invention contains a thioxanthone-based compound having photosensitization action from the viewpoint of improving the curability. Any thioxanthone-based compound having photosensitization action can be used alone, or two or more types can be combined.

The thioxanthone-based compounds having photosensitization action include 2,4-diethylthioxanthone (product name "DETX"; molecular weight 268; manufactured by IGM RESINS B.V.), 2,4-diethylthioxanthen-9-one, 2-isopropylthioxanthone (molecular weight 254), 4-isopropylthioxanthone (molecular weight 254), diester of carboxymethoxythioxanthone and polytetramethylene glycol 250 (product name "OMNIPOL TX"; molecular weight 660; manufactured by IGM RESINS B.V.), and the like.

Preferably the molecular weight of the thioxanthone-based compound having photosensitization action is 500 or higher from the viewpoint of reducing the migration quantity.

Also, from the viewpoint of preventing excess addition, the content of the thioxanthone-based compound having photosensitization action in the ink composition is preferably 0.3 to 10.0% by mass, or more preferably 1.0 to 9.0% by mass.

Under the present invention, preferably the total content of photoinitiators and compounds having photosensitization action in the ink composition is 4.0 to 33.0% by mass.

And, the content of the thioxanthone-based compound having photosensitization action relative to 1.00% by mass of the content of the polymeric photoinitiator in the ink composition is preferably 0.03% by mass or higher, or more preferably 0.05% by mass or higher, or yet more preferably 0.15% by mass or higher. Also, it is preferably 0.70% by mass or lower, or more preferably 0.35% by mass or lower, or yet more preferably 0.25% by mass or lower.

### (Other Sensitizers)

The present invention can contain to the extent that its effects are not impaired, but may not contain, other sensitizers.

The other sensitizers include, for example, 9,10-dibutoxyanthracene, 9,10-diethoxyanthracene, 9,10-dipropoxyanthracene, 9,10-bis(2-ethylhexyloxy)anthracene, and other anthracene-based sensitizers, etc., such as those under the product names of "DBA" and "DEA" (both by Kawasaki Kasei Chemicals Ltd.). Additionally, OMNIRAD EDB diethylamino ethyl benzoate (IGM RESINS B.V.) can also be used besides the above.

It should be noted that the aminobenzoate compound described below is a sensitizer and equivalent in effects to the (meth)acrylamide-based compound in D; in other words, as evident from the Examples and Comparative Examples described below, LED curability will become poor and initiator-derived migration will occur when no aminobenzoate compound is contained, just as when no (meth)acrylamidebased compound in D is contained.

### [C. (Meth)acrylate-based Polymerizable Compound]

The (meth)acrylate-based polymerizable compound in C under the present invention is a type of photopolymerizable compound, and one or more types selected from the compounds listed below can be adopted. It should be noted that the (meth)acrylate-based polymerizable compound in C does not include the polymeric photoinitiator having ethylenic unsaturated bond in A. The (meth)acrylate-based polymerizable compound in C may be a monomer such as monofunctional (meth)acrylate-based polymerizable compound or multifunctional (meth)acrylate-based polymerizable compound, or it may also be an oligomer.

The content in the ink composition of the (meth)acrylate-based polymerizable compound in C under the present invention is preferably 30.0% by mass or higher, or more preferably 33.0% by mass or higher, or yet more preferably 35.0% by mass or higher. Also, it is preferably 99.0% by mass or lower, or more preferably 95.0% by mass or lower, or yet more preferably 90.0% by mass or lower.

### (Monofunctional (Meth)acrylate-based Polymerizable Compounds)

The monofunctional (meth)acrylate-based polymerizable compounds include alkyl (meth)acrylate-based compounds, hydroxyl group-containing (meth)acrylate-based compounds, halogen-containing (meth)acrylate-based compounds, ether group-containing (meth)acrylate-based compounds, carboxyl group-containing (meth)acrylate-based compounds, other (meth)acrylate-based compounds, and the like.

Under the present invention, the content of the monofunctional (meth)acrylate-based polymerizable compound in the ink composition is preferably 10.0% by mass or higher, or more preferably 12.0% by mass or higher, or yet more preferably 15.0% by mass or higher. Also, it is preferably 85.0% by mass or lower, or more preferably 80.0% by mass or lower, or yet more preferably 75.0% by mass or lower.

Additionally, a hydroxyl group-containing (meth)acrylate-based compound is preferred, and its content in the ink composition is preferably 10.0% by mass or higher, or more preferably 15.0% by mass or higher. Also, it is preferably 80.0% by mass or lower, or more preferably 75.0% by mass or lower.

### - Alkyl (Meth)acrylate-based Compounds -

The alkyl (meth)acrylate-based compounds include, for example, methyl (meth)acrylate, ethyl (meth)acrylate, propyl (meth)acrylate, isopropyl (meth)acrylate, n-butyl (meth)acrylate, i-butyl (meth)acrylate, t-butyl (meth)acrylate, amyl (meth)acrylate, isoamyl (meth)acrylate, hexyl (meth)acrylate, 2-ethylhexyl (meth)acrylate, octyl (meth)acrylate, decyl (meth)acrylate, dodecyl (meth)acrylate, isooctyl (meth)acrylate, lauryl (meth)acrylate, stearyl (meth)acrylate, isostearyl (meth)acrylate, isodecyl (meth)acrylate, isomyristyl (meth)acrylate, octadecyl (meth)acrylate, dicyclopentanyl (meth)acrylate, tridecyl (meth)acrylate, nonyl (meth)acrylate, hexadecyl (meth)acrylate, myristyl (meth)acrylate, isobornyl (meth)acrylate, cyclohexyl (meth)acrylate, norbornyl (meth)acylate, dicyclopentenyl (meth)acrylate, dicyclopentenyloxyethyl (meth)acrylate, 1-adamantyl (meth)acrylate, 3,5,5-trimethylcyclohexyl (meth)acrylate, 4-t-butylcyclohexyl (meth)acrylate, and the like.

The content in the ink composition of any monofunctional alkyl (meth)acrylate-based compounds that can be contained in the photocurable inkjet ink composition proposed by the present invention is preferably 10.0% by mass or higher, or more preferably 12.0% by mass or higher, or yet more preferably 15.0% by mass or higher. Also, it is 85.0% by mass or lower, or more preferably 80.0% by mass or lower, or yet more preferably 75.0% by mass or lower.

### - Hydroxyl Group-containing (Meth)acrylate-based Compounds -

The hydroxyl group-containing (meth)acrylate-based compounds include, for example, hydroxymethyl (meth)acrylate, 2-hydroxyethyl (meth)acrylate, 2-hydroxypropyl (meth)acrylate, 3-hydroxypropyl (meth)acrylate, 2-hydroxybutyl (meth)acrylate, 4-hydroxybutyl (meth)acrylate, hydroxypentyl (meth)acrylate, 2-hydroxy-3-methoxypropyl (meth)acrylate, 2-hydroxy-3-butoxypropyl (meth)acrylate, diethylene glycol mono(meth)acrylate, triethylene glycol mono(meth)acrylate, polyethylene glycol mono(meth)acrylate, dipropylene glycol mono(meth)acrylate, polypropylene glycol mono(meth)acrylate, 1,6-hexanediol mono(meth)acrylate, glycerin mono(meth)acrylate, 2-hydroxy-3-chloropropyl (meth)acrylate, 2-hydroxy-3-phenoxypropyl (meth)acrylate, 2-hydroxy-3-allyloxypropyl (meth)acrylate, 2-(meth)acryloyloxyethyl-2-hydroxypropyl phthalate, 2-ethylhexyl EO-modified (meth)acrylate, o-phenylphenol EO-modified (meth)acrylate, p-cumylphenol EO-modified (meth)acrylate, nonylphenol EO-modified (meth)acrylate, and other (poly)alkylene glycol-modified (meth)acrylates, and the like. Of the foregoing hydroxyl group-containing (meth)acrylate-based compounds, hydroxy alkyl (meth)acrylates are preferred.

### - Halogen-containing (Meth)acrylate-based Compounds -

The halogen-containing (meth)acrylate-based compounds include, for example, trifluoromethyl (meth)acrylate, 2,2,2-trifluoroethyl (meth)acrylate, 2,2,3,3-tetrafluoropropyl (meth)acrylate, 1H-hexafluoroisopropyl (meth)acrylate, 1H,1H,5H-octafluoropentyl (meth)acrylate, 1H,1H,2H,2H-heptadecafluorodecyl (meth)acrylate, 2,6-dibromo-4-butylphenyl (meth)acrylate, 2,4,6-tribromophenoxyethyl (meth)acrylate, 2,4,6-tribromophenol 3EO (ethylene oxide) adduct (meth)acrylate, and the like.

### - Ether Group-containing (Meth)acrylate-based Compounds -

The ether group-containing (meth)acrylate-based compounds include, for example, 1,3-butylene glycol methyl ether (meth)acrylate, methoxy triethylene glycol (meth)acrylate, methoxy dipropylene glycol (meth)acrylate, methoxy tripropylene glycol (meth)acrylate, methoxy polypropylene glycol (meth)acrylate, ethoxy diethylene glycol (meth)acrylate, ethyl carbitol (meth)acrylate, 2-ethylhexyl carbitol (meth)acrylate, tetrahydrofurfuryl (meth)acrylate, cresyl polyethylene glycol (meth)acrylate, (meth)acrylic acid-2-(vinyloxyethoxy)ethyl, phenoxyethyl (meth)acrylate, p-nonylphenoxyethyl (meth)acrylate, p-nonylphenoxypolyethylene glycol (meth)acrylate, glycidyl (meth)acrylate, phenoxydiethylene glycol (meth)acrylate, phenoxy-polyethylene glycol (meth)acrylate, hexaethylene glycol monophenyl ether mono(meth)acrylate, diethylene glycol monobutyl ether (meth)acrylate, dipropylene glycol monomethyl ether (meth)acrylate, 3-methoxybutyl (meth)acrylate, methoxydiethylene glycol (meth)acrylate, methoxypropylene glycol (meth)acrylate, methoxypolyethylene glycol (meth)acrylate (number of EO repeating units: 400, 700, etc.), 2-(2-ethoxyethoxy)ethyl (meth)acrylate, 2-ethoxyethyl (meth)acrylate, 2-methoxyethyl (meth)acrylate, 3-methoxybutyl (meth)acrylate, ethoxyethyl (meth)acrylate, ethoxyethoxyethyl (meth)acrylate, butoxyethyl (meth)acrylate, alkoxylated 2-phenoxyethyl (meth)acrylate (ethoxylated 2-phenoxyethyl (meth)acrylate, propoxylated 2-phenoxyethyl (meth)acrylate, etc.), alkoxylated nonylphenyl (meth)acrylate (ethoxylated (4) nonylphenol (meth)acrylate, etc.), 2-phenoxyethyl (meth)acrylate, paracumylphenoxyethylene glycol (meth)acrylate, methylphenoxyethyl (meth)acrylate, ethoxylated succinic acid (meth)acrylate, ethoxylated tribromophenyl (meth)acrylate, ethoxylated nonylphenyl (meth)acrylate, and other alkoxy-based and/or phenoxy-based (meth)acrylates, and the like.

### - Carboxyl Group-containing (Meth)acrylate-based Compounds -

The carboxyl group-containing (meth)acrylate-based compounds include, for example, β-carboxyethyl (meth)acrylate, succinic acid monoacryloyloxyethyl ester, ω-carboxypolycaprolactone mono(meth)acrylate, 2-(meth)acryloyloxyethyl hydrogen phthalate, 2-(meth)acryloyloxypropyl hydrogen phthalate, 2-(meth)acryloyloxypropyl hexahydrohydrogen phthalate, 2-(meth)acryloyloxypropyl tetrahydrohydrogen phthalate, and the like.

### - Other (Meth)acrylate-based Compounds -

The other (meth)acrylate-based compounds include, for example, benzyl (meth)acrylate, N,N-dimethylaminoethyl (meth)acrylate, N,N-dimethylaminopropyl (meth)acrylate, morpholinoethyl (meth)acrylate, trimethylsiloxyethyl (meth)acrylate, diphenyl-2-(meth)acryloyloxyethyl phosphate, 2-(meth)acryloyloxyethyl acid phosphate, caprolactone-modified-2-(meth)acryloyloxyethyl acid phosphate, 2-hydroxy-1-(meth)acryloxy-3-methacryloxypropane, (meth)acryloyloxyethyl phthalate, 2-(meth)acryloyloxyethyl-2-hydroxyethyl phthalate, 2-(meth)acryloyloxypropyl phthalate, tricyclodecanemonomethylol (meth)acrylate, (meth)acrylic acid dimer, diethylaminoethyl (meth)acrylate, 2-(meth)acryloyloxyethyl succinic acid, 2-(meth)acryloyloxyethyl hexahydrophthalic acid, 2-ethylhexyl-diglycol (meth)acrylate, aminoethyl (meth)acrylate, ethyl carbitol (meth)acrylate, ethyl diglycol (meth)acrylate, quaternary salt of dimethylaminoethyl (meth)acrylate benzyl chloride, tribromophenyl (meth)acrylate, 1,4-cyclohexanedimethanol mono(meth)acrylate, cresol (meth)acrylate, trimethylolpropane formal (meth)acrylate, neopentyl glycol (meth)acrylic acid-benzoic acid ester, (2-methyl-2-ethyl-1,3-dioxolane-4-yl)methyl (meth)acrylate, 1-(meth)acryloylpiperidine-2-one, 2-(meth)acrylic acid-1,4-dioxaspiro[4,5]deci-2-ylmethyl, N-(meth)acryloyloxyethyl hexahydrophthalimide, γ-butylolactone (meth)acrylate, caprolactone-modified tetrahydrofurfuryl (meth)acrylate, imide (meth)acrylate, (meth)acrylic acid vinyl, maleimide, and the like.

### (Multifunctional (Meth)acrylate-based Polymerizable Compounds)

Among the multifunctional (meth)acrylate-based polymerizable compounds, the polyfunctional (meth)acrylate-based compounds and vinyl ether group-containing (meth)acrylate-based compounds listed below, and the like, can be used, for example.

The content of any multifunctional (meth)acrylate-based polymerizable compounds that can be contained in the photocurable inkjet ink composition proposed by the present invention is preferably 13.0% by mass or higher, or more preferably 15.0% by mass or higher, or yet more preferably 18.0% by mass or higher, or most preferably 21.0% by mass or higher, relative to the ink composition. Also, it is preferably 38.0% by mass or lower, or more preferably 35.0% by mass or lower, or yet more preferably 30.0% by mass or lower, or most preferably 28.0% by mass or lower.

### - Polyfunctional (Meth)acrylate-based Compounds -

Among the polyfunctional (meth)acrylate-based compounds, ethylene glycol di(meth)acrylate, diethylene glycol di(meth)acrylate, triethylene glycol di(meth)acrylate, tetraethylene glycol di(meth)acrylate, polyethylene glycol (400) di(meth)acrylate, polyethylene glycol (600) diacrylate, and other polyethylene glycol di(meth)acrylates, propylene glycol di(meth)acrylate, dipropylene glycol di(meth)acrylate, tripropylene glycol di(meth)acrylate, and other polypropylene glycol di(meth)acrylates, butylene glycol di(meth)acrylate, pentyl glycol di(meth)acrylate, neopentyl glycol di(meth)acrylate, hydroxypivalyl hydroxypivalate di(meth)acrylate, hydroxypivalyl hydroxypivalate dicaprolactonate di(meth)acrylate, 1,6-hexanediol di(meth)acrylate, 1,2-hexanediol di(meth)acrylate, 1,5-hexanediol di(meth)acrylate, 2,5-hexanediol di(meth)acrylate, 1,7-heptanediol di(meth)acrylate, 1,8-octanediol di(meth)acrylate, 1,2-octanediol di(meth)acrylate, 1,9-nonanediol di(meth)acrylate, 1,10-decanediol di(meth)acrylate, 1,2-decanediol di(meth)acrylate, 1,12-dodecanediol di(meth)acrylate, 1,2-dodecanediol di(meth)acrylate, 1,14-tetradecanediol di(meth)acrylate, 1,2-tetradecanediol di(meth)acrylate, 1,16-hexadecanediol di(meth)acrylate, 1,2-hexadecanediol di(meth)acrylate, 2-methyl-2,4-pentanediol di(meth)acrylate, 3-methyl-1,5-pentanediol di(meth)acrylate, 2-methyl-2-propyl-1,3-propanediol di(meth)acrylate, 2,4-dimethyl-2,4-pentanediol di(meth)acrylate, 2,2-diethyl-1,3-propanediol di(meth)acrylate, 2,2,4-trimethyl-1,3-pentanediol di(meth)acrylate, dimethyloloctane di(meth)acrylate, 2-ethyl-1,3-hexanediol di(meth)acrylate, 2,5-dimethyl-2,5-hexanediol di(meth)acrylate, 2-methyl-1,8-octanediol di(meth)acrylate, 2-butyl-2-ethyl-1,3-propanediol di(meth)acrylate, 2,4-diethyl-1,5-pentanediol di(meth)acrylate, tricyclodecanedimethylol di(meth)acrylate, tricyclodecanedimethylol dicaprolactonate di(meth)acrylate, cyclohexanedimethanol di(meth)acrylate, dicyclopentanyl di(meth)acrylate, and other alkylene glycol di(meth)acrylates, bisphenol A tetraethylene oxide adduct di(meth)acrylate, bisphenol F tetraethylene oxide adduct di(meth)acrylate, bisphenol S tetraethylene oxide adduct di(meth)acrylate, hydrogenated bisphenol A tetraethylene oxide adduct di(meth)acrylate, hydrogenated bisphenol F tetraethylene oxide adduct di(meth)acrylate, hydrogenated bisphenol A di(meth)acrylate, hydrogenated bisphenol F di(meth)acrylate, bisphenol A tetraethylene oxide adduct dicaprolactonate di(meth)acrylate, bisphenol F tetraethylene oxide adduct dicaprolactonate di(meth)acrylate, and other di(meth)acrylates of polyhydric alcohols such as glycerin, pentaerythritol, diglycerin, ditrimethylolpropane, and dipentaerythritol, and other bifunctional monomers, and the like, can be used. Of these polyfunctional (meth)acrylate-based compounds, polyalkylene glycol di(meth)acrylates are preferred, dialkylene glycol di(meth)acrylates are more preferred, and dipropylene glycol di(meth)acrylates are yet more preferred.

Also, listed are glycerin tri(meth)acrylate, trimethylolpropane tri(meth)acrylate, trimethylolpropane tricaprolactonate tri(meth)acrylate, trimethylolethane tri(meth)acrylate, trimethylolhexane tri(meth)acrylate, trimethyloloctane tri(meth)acrylate, pentaerythritol tri(meth)acrylate, and other trifunctional monomers as well as 3EO (ethylene oxide)-modified products, 6EO-modified products, and 9EO modified products thereof (EO-modified trimethylolpropane tri(meth)acrylate, 3EO-modified trimethylolpropane tri(meth)acrylate, 3EO-modified trimethylolethane tri(meth)acrylate, 3EO-modified trimethylolhexane tri(meth)acrylate, etc.) trimethylolpropane tetra(meth)acrylate, pentaerythritol tetra(meth)acrylate, pentaerythritol tetracaprolactonate tetra(meth)acrylate, diglycerin tetra(meth)acrylate, ditrimethylolpropane tetra(meth)acrylate, ditrimethylolpropane tetracaprolactonate tetra(meth)acrylate, ditrimethylolethane tetra(meth)acrylate, ditrimethylolbutane tetra(meth)acrylate, ditrimethylolhexane tetra(meth)acrylate, ditrimethyloloctane tetra(meth)acrylate, dipentaerythritol penta(meth)acrylate, dipentaerythritol hexa(meth)acrylate, tripentaerythritol hexa(meth)acrylate, tripentaerythritol hepta(meth)acrylate, tripentaerythritol octa(meth)acrylate, tripentaerythritol polyalkylene oxide hepta(meth)acrylate, and other tetra- or higher-functional monomers; and the like. Of these, trimethylolpropane triacrylate (TMPTA; trifunctional), ditrimethylolpropane tetraacrylate (DITMPTA; tetrafunctional), dipentaerythritol hexaacrylate (DPHA; hexafunctional), hexanediol diacrylate (HDDA; bifunctional), and the like, can be used.

### - Vinyl Ether Group-containing (Meth)acrylate-based Compounds -

The vinyl ether group-containing (meth)acrylate-based compounds include, for example, (meth)acrylic acid-2-vinyloxyethyl, (meth)acrylic acid-3-vinyloxypropyl, (meth)acrylic acid-1-methyl-2-vinyloxyethyl, (meth)acrylic acid-2-vinyloxypropyl, (meth)acrylic acid-4-vinyloxybutyl, (meth)acrylic acid-1-methyl-3-vinyloxypropyl, (meth)acrylic acid-1-vinyloxymethylpropyl, (meth)acrylic acid-2-methyl-3-vinyloxypropyl, (meth)acrylic acid-3-methyl-3-vinyloxypropyl, (meth)acrylic acid-1,1-dimethyl-2-vinyloxyethyl, (meth)acrylic acid-3-vinyloxybutyl, (meth)acrylic acid-1-methyl-2-vinyloxypropyl, (meth)acrylic acid-2-vinyloxybutyl, (meth)acrylic acid-4-vinyloxycyclohexyl, (meth)acrylic acid-5-vinyloxypentyl, (meth)acrylic acid-6-vinyloxyhexyl, (meth)acrylic acid-4-vinyloxymethylcyclohexylmethyl, (meth)acrylic acid-3-vinyloxymethylcyclohexylmethyl, (meth)acrylic acid-2-vinyloxymethylcyclohexylmethyl, (meth)acrylic **acid-p-vinyloxymethylphenylmethyl,** (meth)acrylic acid-m-vinyloxymethylphenylmethyl, (meth)acrylic acid-o-vinyloxymethylphenylmethyl, (meth)acrylic **acid-2-(vinyloxyisopropoxy)ethyl,** (meth)acrylic acid-2-(vinyloxyethoxy)propyl, (meth)acrylic acid-2-(vinyloxyethoxy)isopropyl, (meth)acrylic acid-2-(vinyloxyisopropoxy)propyl, (meth)acrylic acid-2-(vinyloxyisopropoxy)isopropyl, (meth)acrylic acid-2-(vinyloxyethoxyethoxy)ethyl, (meth)acrylic acid-2-(vinyloxyethoxyisopropoxy)ethyl, (meth)acrylic acid-2-(vinyloxyisopropoxyethoxy)ethyl, (meth)acrylic acid-2-(vinyloxyisopropoxyisopropoxy)ethyl, and the like.

Of these multifunctional (meth)acrylate-based polymerizable compounds, ether group-containing (meth)acrylate-based compounds and (poly)alkylene glycol di(meth)acrylates are preferred. Of the ether group-containing (meth)acrylate-based compounds, one or more types selected from EO-modified trimethylolpropane triacrylate and 3EO-modified trimethylolpropane triacrylate are preferred.

In particular, it is more preferable to contain neopentyl glycol diacrylate that may be PO-modified and/or EO-modified trimethylolpropane triacrylate and/or 3EO-modified trimethylolpropane triacrylate, and dipropylene glycol diarylate, of which most preferably neopentyl glycol diacrylate that may be PO-modified and dipropylene glycol diarylate are contained.

It should be noted that "EO-modified" means "ethylene oxide-modified," while "PO-modified" means "propylene oxide-modified."

When the photocurable inkjet ink composition proposed by the present invention contains dipropylene glycol diarylate and neopentyl glycol diacrylate that may be PO-modified, the mass ratio of the dipropylene glycol diarylate and the neopentyl glycol diacrylate that may be PO-modified is preferably 1/10 to 10/1, or more preferably 3/7 to 7/3, or yet more preferably 4/6 to 6/4.

### [D. (Meth)acrylamide-based Compound and/or Aminobenzoate Compound]

The photocurable inkjet ink composition proposed by the present invention contains a (meth)acrylamide-based compound and/or aminobenzoate compound. It suffices that either one of them is contained, but both can be contained.

The (meth)acrylamide-based compound may be, for example, acryloyl morpholine, (meth)acrylamide, N-isopropyl (meth)acrylamide, N-(2-hydroxyethyl) (meth)acrylamide, or the like. Of these, acryloyl morpholine is preferred.

It should be noted that the (meth)acrylamide-based compound, which is not a sensitizer, produces effects equivalent to those of the aminobenzoate compound being a sensitizer, that is, effects such as excellent LED curability and absence of initiator-derived migration as evident from the Examples and Comparative Examples described below. And, the same effects can be demonstrated even when the two types of compounds, or specifically (meth)acrylamide-based compound and aminobenzoate compound, are contained.

If a (meth)acrylamide-based compound is contained in the ink composition, its content is preferably 1.0% by mass or higher, or more preferably 3.5% by mass or higher, or yet more preferably 6.0% by mass or higher, relative to the ink composition. Also, it is preferably 70.0% by mass or lower, or more preferably 65.0% by mass or lower, or yet more preferably 60.0% by mass or lower.

Also, among the aminobenzoate compounds, those that can also be used as a sensitizer, etc., such as A198 (ESACURE A 198 (formula 1 below)), OMNIPOL AP (both manufactured by IGM RESINS B.V.), GENOPOL AP-1, AP-2 (manufactured by RAHN AG), 2-ethylhexyl-4-dimethylaminobenzoate, ethyl-4-dimethylaminobenzoate, ethyl-4-diethylaminobenzoate, and the like, can be adopted.

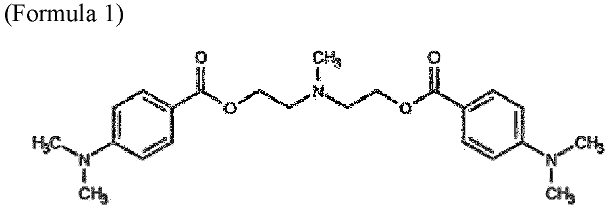

If an aminobenzoate compound is contained in the ink composition, its content is preferably 1.0% by mass or higher, or more preferably 2.0% by mass or higher, or yet more preferably 3.0% by mass or higher, relative to the ink composition. Also, it is preferably 12.0% by mass or lower, or more preferably 10.0% by mass or lower, or yet more preferably 8.0% by mass or lower.

### [E. Surface Additive] (Surfactant, Leveling Agent)

In the photocurable inkjet ink composition proposed by the present invention, any known surfactants used in photocurable inkjet ink compositions can be used as surface additives without any specific limitation according to the inkjet head used and the printing target, including, for example, nonionic surfactants, cationic surfactants, anionic surfactants, and betaine surfactants. Specific examples of the surfactants include, for example, polyether-modified silicone oil, polyester-modified polydimethylsiloxane, polyester-modified methyl alkyl polysiloxane, and other silicone-based surfactants, fluorine-based surfactants, acetylene-based surfactants, and the like. Any of the foregoing surfactants can be used alone, or two or more types can be combined.

The silicone-based surfactants include BYK-307, BYK-315N, BYK-331, BYK-333, BYK-347, BYK-348, BYK-349, BYK-345, BYK-377, BYK-378, BYK-3455, BYK-3500 (BYK-Chemie GmbH), and the like.

The fluorine-based surfactants include F-410, F-444, F-553 (DIC Corporation), FS-65, FS-34, FS-35, FS-31, FS-30 (DuPont de Nemours, Inc.), and the like.

The acetylene-based surfactants include DYNOL 607, DYNOL 609, OLFINE E1004, OLFINE E1010, OLFINE E1020, OLFINE PD-001, OLFINE PD-002W, OLFINE PD-004, OLFINE PD-005, OLFINE EXP. 4001, OLFINE EXP. 4200, OLFINE EXP. 4123, OLFINE EXP. 4300 (Nissin Chemical Co., Ltd.), SURFYNOL 104E, SURFYNOL 104H, SURFYNOL 104A, SURFYNOL 104BC, SURFYNOL 104DPM, SURFYNOL 104PA, SURFYNOL 104PG-50, SURFYNOL 420, SURFYNOL 440, SURFYNOL 465 (Evonik Industries AG), and the like.

In the photocurable inkjet ink composition proposed by the present invention, the content of the surface additive is preferably 0.005% by mass or higher, or more preferably 0.01% by mass or higher, from the viewpoint of lowering the surface tension of the ink composition and thereby increasing its ejection stability from the ink head, while it is preferably 1.5% by mass or lower, or more preferably 1.0% by mass or lower, from the viewpoint of controlling foams that generate in the ink composition during mixing, and thereby increasing its ejection stability.

Preferably the surface tension of the photocurable inkjet ink composition is 32.0 mN/m or lower. If the surface tension exceeds 32.0 mN/m, poor image quality will result due to insufficient wettability with respect to the substrate.

### [Other Polymerizable Compounds]

### - Unsaturated Carboxylic Acid-based Compounds -

The unsaturated carboxylic acid-based compounds include, for example, (meth)acrylic acid, itaconic acid, crotonic acid, isocrotonic acid, fumaric acid, maleic acid, and other unsaturated carboxylic acids, as well as salts thereof and acid anhydrides thereof, and the like.

### (Vinyl Compounds)

In the photocurable inkjet ink composition proposed by the present invention, any vinyl compound can be mixed besides the aforementioned photopolymerizable components. Such vinyl compound is a vinyl compound containing no (meth)acrylic acid-derived structure, including N-vinylpyrrolidone, N-vinylformamide, N-vinylacetamide, N-vinyl-2-caprolactam, N-vinylcarbazole, vinyl methyl oxazolidinone, and the like.

The content of the vinyl compound relative to all photopolymerizable components is preferably 1.0% by mass or higher, or more preferably 3.0% by mass or higher, or yet more preferably 5.0% by mass or higher. Also, it is preferably 10.0% by mass or lower, or more preferably 8.0% by mass or lower, or yet more preferably 6.0% by mass or lower.

### - Styrene-based Compounds -

The styrene-based compounds include, for example, styrene, vinyl toluene, p-hydroxystyrene, p-chlorostyrene, p-bromostyrene, p-methylstyrene, p-methoxystyrene, p-t-butoxystyrene, p-t-butoxycarbonylstyrene, p-t-butoxycarbonyloxystyrene, 2,4-diphenyl-4-methyl-1-pentene, divinylbenzene, and the like.

### - Allylate-based Compounds -

The allylate-based compounds include, for example, allyl glycidyl ether, diallyl phthalate, triallyl trimellitate, isocyanuric acid triallylate, and the like.

### - Other Compounds Having One Ethylenic Unsaturated Bond -

As compounds having one ethylenic unsaturated bond, "other compounds having one ethylenic unsaturated bond" besides the aforementioned compounds can be used.

Such compounds include, for example, vinyl acetate, vinyl monochloroacetate, vinyl benzoate, vinyl pivalate, vinyl butylate, vinyl laurate, vinyl adipate, vinyl crotonate, vinyl 2-ethylhexanoate, three-membered ring compounds (such as vinylcyclopropanes, 1-phenyl-2-vinylcyclopropanes, 2-phenyl-3-vinyloxyranes, 2,3-divinyloxyranes, etc.), cyclic ketene acetals (such as 2-methylene-1,3-dioxepane, polydioxolanes, 2-methylene-4-phenyl-1,3-dioxepane, 4,7-dimethyl-2-methylene-1,3-dioxepane, 5,6-benzo-2-methylene-1,3-dioxepane, etc.), and the like.

### (Other Oligomers)

Also, in consideration of environmental aspects, polyurethane oligomers and/or polyurethane polyurea oligomers that are made from polyester polyols obtained using plant-derived dicarboxylic acid components and diol components, can also be adopted.

Plant oil-modified polyfunctional polyester acrylate oligomers can be used without limitation so long as they are plant oil-modified polyester acrylate oligomers having two to six acrylate groups in the molecule.

Of these, preferably one or more types selected from the group that consists of, for example, EBECRYL 450, 452, 820, 1622, and toll oil fatty acid-modified hexafunctional polyester acrylates (such as AGISYN 716, etc.) are used, as doing so can increase the biomass degree of the photocurable inkjet ink composition.

Any of these oligomers can be used alone, or two or more types can be combined.

### (Polymers)

Polymers as curable resins having ethylenic unsaturated bond are components that will increase in molecular weight together with the aforementioned monomers and oligomers, and because they have high molecular weight even before ultraviolet ray or other active energy ray is irradiated, these components help improve the viscoelasticity of ink compositions.

Such polymers are used in a state of being dissolved or dispersed in a monomer constituting a low-viscosity liquid, for example. The polymers having ethylenic unsaturated bond include polydiallyl phthalate, acrylic resins having unreacted unsaturated groups, acrylic-modified phenol resins, and the like. Of these, polydiallyl phthalate can be favorably used because it has particularly excellent compatibility with the aforementioned monomers and oligomers.

Also, while the photocurable inkjet ink composition need not contain any polymer having ethylenic unsaturated bond, if it is to contain one, then the content of the polymer having ethylenic unsaturated bond relative to the photocurable inkjet ink composition is preferably 0 to 50.0% by mass, or more preferably 0 to 30.0% by mass, or yet more preferably 0 to 20.0% by mass.

### [Pigments]

The photocurable inkjet ink composition proposed by the present invention contains a pigment. Pigments are components added to impart coloring power, concealing power, etc., to ink compositions and include, for example, coloring pigments, white pigments, metal powders, and the like. Such pigments include, without any specific limitation, the organic and/or inorganic pigments listed below that are conventionally used in ink compositions, for example.

The pigments include dye lake pigments, azo-based, benzimidazolone-based, phthalocyanine-based, quinacridone-based, anthraquinone-based, dioxazine-based, indigo-based, thioindigo-based, perylene-based, perinone-based, diketopyrrolopyrrolebased, isoindolinone-based, nitro-based, nitroso-based, flavanthrone-based, quinophthalone-based, pyranthrone-based, and indanthrone-based pigments, as well as various inorganic pigments, and the like.

Of these pigments, examples include disazo yellow (Pigment Yellow 12, Pigment Yellow 13, Pigment Yellow 14, Pigment Yellow 17, Pigment Yellow 1), hansa yellow, and other yellow pigments, brilliant carmine 6B, lake red C, watching red, quinacridone, and other magenta pigments, phthalocyanine blue, phthalocyanine green, alkali blue, and other cyan pigments, titanium oxide, red iron oxide, antimony red, cadmium yellow, cobalt blue, Prussian blue, ultramarine blue, iron black, chrome oxide green, carbon black, graphite, and other colored pigments (including coloring pigments of white color, black color, and other achromatic coloring pigments), aluminum paste, bronze powder, and other metal powders, and the like.

The content of the pigment, an example of which is approx. 1 to 20% by mass relative to the total ink composition according to the degree of coloring to be achieved, is not specifically limited. It should be noted that, if a colored ink composition is to be prepared, pigments or dyes of other colors can be used concomitantly as complementary colors, or ink compositions of other colors can be added.

The average particle size (D50) of the pigment contained in the photocurable inkjet ink composition is preferably 50 nm or greater, or more preferably 100 nm or greater, from the viewpoint of coloring power. Also, it is preferably 500 nm or smaller or more preferably 350 nm or smaller from the viewpoint of dispersion stability.

### (Pigment Dispersants/Pigment-Dispersing Resins)

If the photocurable inkjet ink composition proposed by the present invention adopts a pigment as a colorant, a pigment dispersant and/or pigment-dispersing resin may be used.

For the pigment dispersant, one or more types selected from the group that consists of known nonionic surfactants, anionic surfactants, cationic surfactants, and amphoteric surfactants can be used.

Among the surfactants, one or more types selected from the group that consists of, for example, silicone-based surfactants (such as polyether-modified silicone oil, polyester-modified polydimethylsiloxane, polyester-modified methyl alkyl polysiloxane, etc.), fluorine-based surfactants, oxyalkylene ether-based surfactants, acetylene glycol-based surfactants, phosphorus-based surfactants, sulfonic acid-based surfactants, and the like, can be used.

Also, among the pigment-dispersing resins, one or more types selected from the group that consists of polymeric dispersants (such as carbodiimide-based, polyester-based, polyamine-based, polyester amine-based, polyurethane based, and fatty acid amine-based dispersants, polyacrylate-based, polycaprolactone-based, polysiloxanebased, multichain polymeric nonionic-based, and polymeric ionic-based dispersants, etc.), and the like, can be used.

If the photocurable inkjet ink composition proposed by the present invention contains any pigment dispersant and/or pigment-dispersing resin, preferably the pigment dispersant and/or pigment-dispersing resin is contained by 1 to 200% by mass relative to 100% by mass representing the total quantity of the pigment used.

### (Other Components)

The photocurable inkjet ink composition proposed by the present invention may contain polymerization inhibitors, storability-improving agents, UV absorbents, antioxidants, defoaming agents, antifungal agents, rustproofing agents, thickening agents, humectants, pH-adjusting agents, and various other types of additives, as other components. Also, non-curable resins may be used, or they may not be used. Additionally, solvents may be contained, but they may not be contained.

### (Solvents)

The photocurable inkjet ink composition proposed by the present invention can contain solvents, if necessary. The solvents include ester-based organic solvents, ether-based organic solvents, ether ester-based organic solvents, ketone-based organic solvents, aromatic hydrocarbon solvents, nitrogen-containing organic solvents, and the like. Also, the solvents include those whose boiling point at 1 atm is 150 to 220°C. Preferably the solvents are not used to the greatest extent possible from the viewpoints of curability of the ink composition, environmental issues, and the like, and the percentage of the solvents is preferably 5% by mass or lower, or more preferably 2% by mass or lower, in the ink composition.

Known polymerization inhibitors may be contained for the purpose of preventing the photocurable inkjet ink composition from polymerizing during storage. Among the polymerization inhibitors, preferred examples include butylhydroxytoluene and other phenol compounds, tocopherol acetate, nitrosamine, benzotriazole, hindered amine, and the like, of which butylhydroxytoluene is a more preferred example. Adding such polymerization inhibitors prevents the ink composition from thickening as a result of progression of the polymerization reaction during storage. An example of polymerization inhibitor content in the ink composition is approx. 0.1 to 1.0% by mass relative to the ink composition.

### (UV Absorbents)

The UV absorbents include benzophenone-based UV absorbents, benzotriazolebased UV absorbents, salicylate-based UV absorbents, hydroxyphenyltriazine-based UV absorbents, cyanoacrylate-based UV absorbents, nickel complex salt-based UV absorbents, and the like.

### (Antioxidants)

The antioxidants include phenol-based antioxidants, amine-based antioxidants, sulfur-based antioxidants, phosphorus-based antioxidants, and the like.

### (Defoaming Agents)

The defoaming agents include silicone-based defoaming agents, Pluronic (registered trademark)-based defoaming agents, and the like.

The viscosity at 25°C of the photocurable inkjet ink composition proposed by the present invention is preferably 6.0 cps or higher, or more preferably 8.0 cps or higher, or yet more preferably 10.0 cps or higher, and preferably 90.0 cps or lower, or more preferably 80.0 cps or lower, or yet more preferably 75.0 cps or lower. In the ink composition, viscosity-adjusting agents, and the like, are used, if necessary. It should be noted that the viscosities stated in the Specification represent viscosities measured using a type-E viscometer (RE100L Viscometer, manufactured by Toki Sangyo Co., Ltd.) under the conditions of 25°C and 10 rpm.

### <Methods for Preparing Photocurable Inkjet Ink Composition>

Next, how the photocurable inkjet ink composition proposed by the present invention is manufactured using these materials is explained.

The photocurable inkjet ink composition proposed by the present invention can be obtained by, for example, dispersing and mixing the components using a wet circulation mill, bead mill, ball mill, sand mill, attritor, roll mill, DCP mill, agitator, Henschel mixer, colloid mill, ultrasonic homogenizer, high-pressure homogenizer (Microfluidizer, Nanomizer, Ultimizer, Genus PY, DeBEE 2000, etc.), pearl mill, or other dispersing machine, and then adjusting the viscosity of the photocurable inkjet ink composition as necessary. It should be noted that the photocurable inkjet ink composition may also be prepared by mixing the pigments with the aforementioned pigment dispersants and photopolymerizable compounds to obtain a base ink composition beforehand, to which the remainders of the aforementioned components are added to achieve a desired compositional makeup.

### <Methods for Printing>

How printing is performed using the photocurable inkjet ink composition proposed by the present invention is explained.

The methods, where the inkjet printing device used is not specifically limited, include those whereby the photocurable inkjet ink composition is supplied to the printer head of an inkjet recording printer device and the ink composition is discharged from the printer head to the substrate to be printed, after which the ink composition that has landed on the substrate is exposed to an active energy ray and cured, and the like. The active energy ray may be ultraviolet ray, electron beam, visible light, or the like, irradiated from a light-emitting diode (LED), any of various types of lamps, or electrode. In particular, the photocurable inkjet ink composition proposed by the present invention exhibits excellent curability under ultraviolet ray from a light-emitting diode (LED) light source.

Also, the substrate is not specifically limited, either, and any substrates can be used so long as conventionally known photocurable inkjet ink compositions can be applied thereon, where the substrates include, for example, resin, paper, capsule, gel, metal foil, glass, wood, fabric, and the like. Also, regarding the resin, applicable substrates include one or more types selected from the group that consists of, for example, polyester-based polymers (such as polyethylene terephthalate (PET), polyethylene naphthalate, etc.), cellulose-based polymers (such as diacetyl cellulose, triacetyl cellulose (TAC), etc.), polycarbonate-based polymers, polyacrylic-based polymers (such as polymethyl methacrylate, etc.), polyvinyl chloride-based polymers, polyolefin-based polymers (such as polyethylene, polypropylene, polyolefin polymers having a cyclic or norbornene structure, ethylene/propylene copolymeric polymers, etc.), polyamide-based polymers (such as nylon, aromatic polyamide polymers, etc.), polystyrene-based polymers (such as polystyrene, acrylonitrile/styrene copolymeric polymers, etc.), polyimide-based polymers, polysulfone-based polymers, polyether sulfone-based polymers, polyether ketone-based polymers, polyphenyl sulfide-based polymers, polyvinyl alcohol-based polymers, polyvinylidene chloride-based polymers, polyvinyl butyral-based polymers, polyarylate-based polymers, polyoxymethylenebased polymers, and polyepoxy-based polymers, as well as blends of these polymers, and the like.

The methods for printing and curing the ink composition proposed by the present invention specifically include one whereby the ink composition proposed by the present invention is discharged to the substrate through the inkjet head, after which the coating film of the ink composition proposed by the present invention that has landed on the substrate is exposed to light and thereby cured.

For example, the discharging to the substrate (printing of images) can be implemented by supplying the ink composition proposed by the present invention to a low-viscosity compatible printer head on an inkjet recording printer, and then discharging the ink composition from the printer head so that the coating film on the substrate will have a film thickness of 1 to 60 µm, for example. Also, the exposure to light and curing (curing of images) can be implemented by irradiating light on the coating film of the ink composition proposed by the present invention that has been applied on the substrate as images.

For the inkjet recording printer device with which to print the ink composition proposed by the present invention, any conventionally used inkjet recording printer device can be utilized. It should be noted that, if a continuous-type inkjet recording printer device is used, a conductivity-imparting agent is added further to the ink composition proposed by the present invention to adjust its conductivity.

The light source in the aforementioned curing of the coating film may be ultraviolet ray (UV lamp), ultraviolet ray (metal halide lamp), ultraviolet ray (light-emitting diode (LED)), electron beam, visible light, or the like. Ultraviolet ray from a light-emitting diode (LED) light source is defined as "light irradiated from a light-emitting diode that generates ultraviolet ray whose emission peak wavelength is in a range of 360 to 420 nm."

### Examples

The present invention is explained in greater detail below by citing examples; however, the present invention is not limited to these examples alone. It should be noted that, unless otherwise specified, "%" and "part" refer to "% by mass" and "part by mass," respectively. Also, the numerical values indicating the quantities of the materials in the tables represent "parts by mass."

In the Examples and Comparative Examples, A-1 to 12 shown in Table 1 below were used as ethylenic unsaturated bond-containing polymeric photoinitiators. For the synthesizing methods thereof, Japanese Patent No. 7016199 can be referred to.

The photocurable inkjet ink compositions in the Examples and Comparative Examples shown in Tables 2 to 4 below were prepared, and the test results of the respective photocurable inkjet ink compositions are shown in Tables 2 to 4.

### (Photocurable Inkjet Ink Compositions)

The components used in Tables 2 to 4 below are as follows:
P.Y. 150: Pigment Yellow 150
P.R. 122: Pigment Red 122
P.R. 254: Pigment Red 254
P.B. 15:4: Pigment Blue 15:4
P.Bk. 7: Carbon Black
S56000: Polymeric dispersant (SOLSPERSE 56000, manufactured by Lubrizol Japan Ltd.)
DPGDA: Dipropylene glycol diacrylate
(PO)NPGDA: Neopentyl glycol PO-modified diacrylate
TPO: 2,4,6-trimethylbenzoyl-diphenylphosphine oxide (acylphosphine oxide-based photoinitiator)
TR-20400: 1-(9,9-dibutyl-9H-fluorene-2-yl)-2-methyl-2-morpholinopropane-1-one (manufactured by Changzhou Tronly New Electronic Materials Co., Ltd.)
A-1 to 12: Ethylenic unsaturated bond-containing polymeric photoinitiators having ethylenic unsaturated groups, benzophenone groups, and number-averaged molecular weights, shown in Table 1 below
A198: Aminobenzoate compound (ESACURE A 198, manufactured by IGM RESINS B.V.)
DETX: 2,4-diethyl thioxanthone (manufactured by IGM RESINS B.V.)
TX: Diester of carboxymethoxythioxanthone and polytetramethylene glycol 250 (molecular weight 660, manufactured by IGM RESINS B.V.)
UV22: Quinone-based polymerization inhibitor (manufactured by BASF SE)
BYK-3500: Polyether-modified acryloyl group-containing polydimethylsiloxane (solids content 100%) (manufactured by BYK-Chemie GmbH)

### (Preparation of Photocurable Inkjet Ink Compositions)

The components were mixed to the mixing makeups (% by mass) shown in Tables 2 to 4 and then mixed under agitation, to obtain the photocurable inkjet ink compositions in the Examples and Comparative Examples.

### <Methods for Evaluation>

### (Viscosity)

The photocurable inkjet ink compositions obtained in the Examples and Comparative Examples were measured for viscosity (cps) using a type-E viscometer (product name: RE100L Viscometer, manufactured by Toki Sangyo Co., Ltd.) under the conditions of 25°C in temperature and 10 rpm in rotor speed.

### (Surface Tension)

Each photocurable inkjet ink composition was measured for surface tension (mN/m) at the temperature of 25°C using a dynamic wettability tester (product name: WET-6000, manufactured by Rhesca Co., Ltd.)

### (Average Particle Size)

The photocurable inkjet ink compositions obtained in the Examples and Comparative Examples were diluted 500-fold with benzyl acrylate and then measured at 23°C using a Microtrac particle size analyzer for ultrafine particles (manufactured by Nikkiso Co., Ltd.).

### (LED Curability)

The photocurable inkjet ink compositions obtained in the Examples and Comparative Examples were each applied using Bar Coater No. 6 on the surface of a polyethylene terephthalate film (E5100 manufactured by Toyobo Co., Ltd.), to obtain each coated product. Next, the coated products were irradiated with LED light of 395 nm in wavelength using a LED lamp manufactured by Phoseon Technology., under the condition of 80 mJ/cm² in cumulative light quantity, and then evaluated according to the evaluation criteria below.
∘: The ink coating film is not removed when rubbed with a cotton swab.
×: The ink coating film is removed when rubbed with a cotton swab.

### (Migration Test)

The photocurable inkjet ink compositions obtained in the Examples and Comparative Examples were each printed on the surface of a biaxially oriented polypropylene film (P2161 manufactured by Toyobo Co., Ltd.) using a single-pass printer at the printing speed of 48 m/min, and subsequently cured by LED irradiation with 500 mJ of irradiation energy, to obtain each coated product. These coated products were cut to 13 mm x 13 mm in size to obtain test pieces.

In a migration evaluation cell, 200 mL of 50% ethanol-water solution was introduced as a mock food, and each test piece was placed with the mock food contacting the back side of its printed face and kept stationary for 10 days at 40°C. After 10 days, the ethanol-water solution was collected, and 0.2 mg of an internal standard solution (terphenyl) was added to the collected 200 mL of ethanol-water solution. The ethanol-water solution to which the internal standard solution had been added was passed through a solid-phase extraction cartridge, after which the retained components were extracted with 1 mL of methanol. As a result, a methanol solution containing the components eluted from the test piece into the ethanol-water solution, in a 200-times concentrated state, was obtained.

Each methanol solution was analyzed by gas chromatography mass spectrometry (GC/MS) to compare the peak area of the internal standard solution (1000 ppb) and peak area of the migration components. Based on the GC/MS results, the concentration in the filtrate of the migration components representing initiator-derived components was calculated and evaluated according to the evaluation criteria below.
∘: No higher than 10 ppb
△: Over 10 ppb, but no higher than 1 ppm
×: Over 1 ppm

It should be noted that, in Comparative Examples 3 and 4 due to poor curability, and in Comparative Example 5 due to poor image quality, the results were all found undesirable for a photocurable inkjet ink composition. This eliminated the need to conduct the migration test.

**[Table 1]**

| | Ethylenic unsaturated groups | | Number of ethylenic unsaturated groups/Number of benzophenone groups | Number-averaged molecular weight |
|---|---|---|---|---|
| | Type | Quantity (average) | | |
| A-1 | Acrylamide group | 1 | 1/2 | 2100 |
| A-2 | Methacrylamide group | 1 | 1/1 | 6400 |
| A-3 | Acrylamide group | 2 | 2/1 | 8200 |
| A-4 | Acrylamide group | 2 | 4/1 | 12200 |
| | Vinyl group | 2 | | |
| A-5 | Acrylamide group | 2 | 1/2 | 5200 |
| A-6 | Methacrylamide group | 1 | 1/6 | 28400 |
| A-7 | Acrylamide group | 1 | 1/2 | 56600 |
| | Maleimide group | 1 | | |
| A-8 | Acrylamide group | 1 | 1/1 | 9500 |
| | Allyl group | 1 | | |
| A-9 | Acrylamide group | 2 | 1/1 | 4800 |
| A-10 | Acrylamide group | 1 | 1/3 | 8200 |
| | Acrylate group | 1 | | |
| A-11 | Acrylamide group | 2 | 2/1 | 3200 |
| A-12 | Methacrylamide group | 1 | 1/2 | 5500 |

**[Table 2]**

| | | Examples | | | | | | | | |
|---|---|---|---|---|---|---|---|---|---|---|
| | | 1 | 2 | 3 | 4 | 5 | 6 | 7 | 8 | 9 |
| Pigments | P.Y. 150 | | | | | | | | | |
| | P.R. 122 | | | | | | | | | |
| | P.R. 254 | | | | | | | | | |
| | P.B. 15:4 | 2.60% | 2.60% | 2.60% | 2.60% | 2.60% | 2.60% | 2.60% | 2.60% | 2.60% |
| | P.Bk. 7 | | | | | | | | | |
| Dispersant | S56000 | 1.04% | 1.04% | 1.04% | 1.04% | 1.04% | 1.04% | 1.04% | 1.04% | 1.04% |
| Photopolymerizable compounds | Acryloyl morpholine | 20.00% | 20.00% | 20.00% | 20.00% | 20.00% | 20.00% | 20.00% | 20.00% | 20.00% |
| | 4-hydroxybutyl acrylate | 43.50% | 43.50% | 43.50% | 43.50% | 43.50% | 43.50% | 43.50% | 43.50% | 43.50% |
| | DPGDA | 10.00% | 10.00% | 10.00% | 10.00% | 10.00% | 10.00% | 10.00% | 10.00% | 10.00% |
| | (PO)NPGDA | 10.00% | 10.00% | 10.00% | 10.00% | 10.00% | 10.00% | 10.00% | 10.00% | 10.00% |
| Initiators | TPO | | | | | | | | | |
| | TR-20400 | | | | | | | | | |
| | A-1 | 10.00% | | | | | | | | |
| | A-2 | | 10.00% | | | | | | | |
| | A-3 | | | 10.00% | | | | | | |
| | A-4 | | | | 10.00% | | | | | |
| | A-5 | | | | | 10.00% | | | | |
| | A-6 | | | | | | 10.00% | | | |
| | A-7 | | | | | | | 10.00% | | |
| | A-8 | | | | | | | | 10.00% | |
| | A-9 | | | | | | | | | 10.00% |
| | A-10 | | | | | | | | | |
| | A-11 | | | | | | | | | |
| | A-12 | | | | | | | | | |
| Sensitizers | A198 | | | | | | | | | |
| | DETX | | | | | | | | | |
| | TX | 2.00% | 2.00% | 2.00% | 2.00% | 2.00% | 2.00% | 2.00% | 2.00% | 2.00% |
| Polymerization inhibitor | UV22 | 0.40% | 0.40% | 0.40% | 0.40% | 0.40% | 0.40% | 0.40% | 0.40% | 0.40% |
| Leveling agent | BYK-3500 | 0.50% | 0.50% | 0.50% | 0.50% | 0.50% | 0.50% | 0.50% | 0.50% | 0.50% |
| Evaluation results | Total | 100.0% | 100.0% | 100.0% | 100.0% | 100.0% | 100.0% | 100.0% | 100.0% | 100.0% |
| | Viscosity (cps (25°C)) | 17.2 | 36.5 | 31.3 | 47.4 | 28.5 | 58.5 | 81.2 | 33.5 | 28.6 |
| | Surface tension (mN/m (25°C)) | 22.0 | 22.0 | 22.0 | 22.0 | 22.0 | 22.0 | 22.0 | 22.0 | 22.0 |
| | Average particle size (D50) m | 150 | 150 | 150 | 150 | 150 | 150 | 150 | 150 | 150 |
| | LED curability | ○ | ○ | ○ | ○ | ○ | ○ | ○ | ○ | ○ |
| | Initiator-derived migration | ○ | ○ | ○ | ○ | ○ | ○ | ○ | ○ | ○ |

**[Table 3]**

| | | Examples | | | | | | | | |
|---|---|---|---|---|---|---|---|---|---|---|
| | | 10 | 11 | 12 | 13 | 14 | 15 | 16 | 17 | 18 |
| Pigments | P.Y. 150 | | | | | | | | | |
| | P.R. 122 | | | | | | | | | |
| | P.R. 254 | | | | | | | | | |
| | P.B. 15:4 | 2.60% | 2.60% | 2.60% | 2.60% | 2.60% | 2.60% | 2.60% | 2.60% | 2.60% |
| | P. Bk. 7 | | | | | | | | | |
| Dispersant | S56000 | 1.04% | 1.04% | 1.04% | 1.04% | 1.04% | 1.04% | 1.04% | 1.04% | 1.04% |
| Photopolymerizable compounds | Acryloyl morpholine | 20.00% | 20.00% | 20.00% | 3000% | 5.00% | 20.00% | 50.00% | 50.00% | |
| | 4-hydroxybutyl acrylate | 43.50% | 43.50% | 43.50% | 39.50% | 49.50% | 42.50% | 13.50% | 13.50% | 58.50% |
| | DPGDA | 10.00% | 10.00% | 10.00% | 10.00% | 10.00% | 10.00% | 10.00% | 10.00% | 10.00% |
| | (PO)NPGDA | 10.00% | 10.00% | 10.00% | 10.00% | 10.00% | 10.00% | 10.00% | 10.00% | 10.00% |
| Initiators | TPO | | | | | | | | | |
| | TR-20400 | | | | | | | | | |
| | A-1 | | | | | | | | | |
| | A-2 | | | | | | | | | |
| | A-3 | | | | | | | | | |
| | A-4 | | | | | | | | | |
| | A-5 | | | | | | | | | |
| | A-6 | | | | | | | | | |
| | A-7 | | | | | | | | | |
| | A-8 | | | | | | | | | |
| | A-9 | | | | | | | | | |
| | A-10 | 10.00% | | | | | | | | |
| | A-11 | | 10.00% | | | | | | | |
| | A-12 | | | 10.00% | 5.00% | 20.00% | 10.00% | 10.00% | 10.00% | 10.00% |
| Sensitizers | A198 | | | | | | | | | 5.00% |
| | DETX | | | | | | | | 2.00% | |
| | TX | 2.00% | 2.00% | 2.00% | 2.00% | 2.00% | 2.00% | 2.00% | | 2.00% |
| Polymerization inhibitor | UV22 | 0.40% | 0.40% | 0.40% | 0.40% | 0.40% | 0.40% | 0.40% | 0.40% | 0.40% |
| Leveling agent | BYK-3500 | 0.50% | 0.50% | 0.50% | 0.50% | 0.50% | 0.50% | 0.50% | 0.50% | 0.50% |
| Evaluation results | Total | 100.0% | 100.0% | 100.0% | 100.0% | 100.0% | 100.0% | 100.0% | 100.0% | 100.0% |
| | Viscosity (cps (25°C)) | 39.2 | 28.0 | 29.1 | 12.0 | 62.5 | 33.5 | 50.5 | 45.5 | 28.8 |
| | Surface tension (mN/m (25°C)) | 22.0 | 22.0 | 22.0 | 22.0 | 22.1 | 22.0 | 22.0 | 22.1 | 22.1 |
| | Average particle size (D50) nm | 150 | 150 | 150 | 150 | 140 | 150 | 150 | 160 | 150 |
| | LED curability | ○ | ○ | ○ | ○ | ○ | ○ | ○ | ○ | ○ |
| | Initiator-derived migration | ○ | ○ | ○ | ○ | ○ | ○ | ○ | ○ | ○ |

**[Table 4]**

| | | Examples | | | | Comparative Examples | | | | |
|---|---|---|---|---|---|---|---|---|---|---|
| | | 19 | 20 | 21 | 22 | 1 | 2 | 3 | 4 | 5 |
| Pigments | P.Y. 150 | | 2.28% | | | | | | | |
| | P.R. 122 | | | 1.60% | | | | | | |
| | P.R. 254 | | | 1.92% | | | | | | |
| | P.B. 15:4 | | | | | 2.60% | 2.60% | 2.60% | 2.60% | 2.60% |
| | P.Bk. 7 | | | | 1.60% | | | | | |
| Dispersant | S56000 | | 0.92% | 1.66% | 0.64% | 1.04% | 1.04% | 1.04% | 1.04% | 1.04% |
| Photopolymerizable compounds | Acryloyl morpholine | 25.00% | 25.00% | 25.00% | 20.00% | 30.00 % | 30.00 % | 50.00 % | | 20.00 % |
| | 4-hydroxybutyl acrylate | 48.10% | 44.90% | 42.90% | 50.90% | 39.50 % | 39.50 % | 20.50 % | 69.50 % | 44.00 % |
| | DPGDA | 10.00% | 10.00% | 10.00% | 10.00% | 10.00 % | 10.00 % | 10.00 % | 10.00 % | 10.00 % |
| | (PO)NPGDA | 10.00% | 10.00% | 10.00% | 10.00% | 10.00 % | 10.00 % | 10.00 % | 10.00 % | 10.00 % |
| Initiators | TPO | | | | | 5.00% | | | | |
| | TR-20400 | | | | | | 5.00% | | | |
| | A-1 | | | | | | | | | |
| | A-2 | | | | | | | | | |
| | A-3 | | | | | | | | | |
| | A-4 | | | | | | | | | |
| | A-5 | | | | | | | | | |
| | A-6 | | | | | | | | | |
| | A-7 | | | | | | | | | |
| | A-8 | | | | | | | | | |
| | A-9 | | | | | | | | | |
| | A-10 | | | | | | | | | |
| | A-11 | | | | | | | | | |
| | A-12 | 5.00% | 5.00% | 5.00% | 5.00% | | | 5.00% | 5.00% | 10.00 % |
| Sensitizers | A198 | | | | | | | | | |
| | DETX | | | | | | | | | |
| | TX | 1.00% | 1.00% | 1.00% | 1.00% | 1.00% | 1.00% | | 1.00% | 2.00% |
| Polymerization inhibitor | UV22 | 0.40% | 0.40% | 0.40% | 0.40% | 0.40% | 0.40% | 0.40% | 0.40% | 0.40% |
| Leveling agent | BYK-3500 | 0.50% | 0.50% | 0.50% | 0.50% | 0.50% | 0.50% | 0.50% | 0.50% | |
| Evaluation results | Total | 100.0% | 100.0% | 100.0% | 100.0% | 100.0 % | 100.0 % | 100.0 % | 100.0 % | 100.0 % |
| | Viscosity (cps (25°C)) | 21.0 | 26.0 | 28.0 | 25.5 | 13.0 | 14.0 | 15.5 | 10.0 | 29.0 |
| | Surface tension (mN/m (25°C)) | 22.2 | 22.2 | 22.1 | 22.0 | 22.2 | 22.1 | 22.1 | 22.0 | 34.5 |
| | Average particle size (D50) nm | - | 190 | 180 | 120 | 140 | 150 | 150 | 150 | 150 |
| | LED curability | ○ | ○ | ○ | ○ | ○ | ○ | x | x | ○ |
| | Initiator-derived migration | ○ | ○ | ○ | ○ | x | x | - | - | - |

According to the Examples that represent ink compositions conforming to the present invention, the ink compositions conforming to the present invention exhibited excellent LED curability in addition to having appropriate viscosity and surface tension, and did not cause migration.

By contrast, Comparative Examples 1 and 2 containing none of initiators A-1 to A-12 caused migration. Comparative Example 3 containing no thioxanthone-based compound having photosensitization action exhibited poor LED curability. Additionally, Comparative Example 4 containing neither (meth)acrylamide-based compound nor aminobenzoate compound also exhibited poor LED curability. Also, Comparative Example 5 containing no surface additive resulted in a lower level of dot wettability and spreadability due to high surface tension.

## Claims

1. A photocurable inkjet ink composition containing the following A to E, having a viscosity of 100 cps or less and a surface tension of 32.0 mN/m or less:
A. a polymeric photoinitiator having ethylenic unsaturated bonds,
B. a thioxanthone-based compound having photosensitization action,
C. a (meth)acrylate-based polymerizable compound,
D. a (meth)acrylamide-based compound and/or aminobenzoate compound, and
E. a surface additive.

2. The photocurable inkjet ink composition according to claim 1, wherein the above-mentioned A, that is, a polymeric photoinitiator having ethylenic unsaturated bonds is a photoinitiator containing at least one (meth)acrylamide group and at least one benzophenone group, wherein the (meth)acrylamide group and the benzophenone group are connected by a bivalent organic group having a polyether skeleton and urethane bond.

3. The photocurable inkjet ink composition according to claim 1 or 2, containing a pigment having an average particle diameter of 500 nm or less.

4. The photocurable inkjet ink composition according to claim 1 or 2, which is curable by light of 360 to 420 nm in wavelength.

5. The photocurable inkjet ink composition according to claim 1 or 2, containing a thioxanthone-based compound having a photosensitization action that has a molecular weight of 500 or more.
